# EUROPÄISCHE PATENTSCHRIFT

(11) **EP 0 434 607 B1**
(45) Veröffentlichungstag und Bekanntmachung des Hinweises auf die Patenterteilung: **06.04.1994**
(21) Anmeldenummer: 90810900.2
(22) Anmeldetag: 21.11.1990
(51) Int. Cl.: F04B 39/00, F16J 1/12

(54) **Kolbenkompressor der Horizontalbauart**
Piston compressor of the horizontal type
Compresseur à piston du type horizontal

(30) Priorität: 21.12.1989 CH 4573/89
(43) Veröffentlichungstag der Anmeldung: 26.06.1991
(73) Patentinhaber: Maschinenfabrik Sulzer-Burckhardt AG, CH-4002 Basel (CH)
(72) Erfinder: Mayer, Roland, CH-4104 Oberwil (CH)
(74) Vertreter: Hammer, Bruno Dr.

(56) Entgegenhaltungen:
- DE-A- 2 061 063
- FR-A- 709 490
- US-A- 1 835 662
- US-A- 3 036 873

## Beschreibung

Die Erfindung bezieht sich auf einen Kolbenkompressor mit mindestens einem eine im wesentlichen horizontale Achse aufweisenden Zylinder und einem darin geführten Kolben, der über eine Kolbenstange und einen Kreuzkopf von einer Kurbelwelle angetrieben ist, wobei das dem Kreuzkopf abgewendete Ende der Kolbenstange in eine Bohrung des Kolbens ragt und der Kolben mit diesem Kolbenstangenende lösbar verbunden ist.

Bei Kolbenkompressoren dieser Art besteht das Problem, dass sich die am Kreuzkopf befestigte Kolbenstange mit ihrem den Kolben tragenden Ende nach unten ausbiegt und ihre Achse damit von dem idealen horizontalen Verlauf abweicht. Diese Abweichung wird im Laufe des Betriebes des Kolbenkompressors zusätzlich grösser infolge der Abnützung des Kolbens oder der Abnützung von Kolbenführungsringen, falls der Kolben mit solchen Ringen versehen ist. Diese Abweichung wird in Fachkreisen auch mit "runout" bezeichnet, und für die Grösse dieses "runout" sind in den Konstruktionsrichtlinien der amerikanischen Erdölindustrie bestimmte Toleranzwerte vorgeschrieben. Um zu gross gewordene "runout"-Werte auszugleichen, ist es schon bekannt, die Achse des Kreuzkopfes und damit der Kolbenstangenbefestigung zu verstellen. Diese Massnahme hat jedoch den Nachteil, dass der Kreuzkopf und die Kolbenstange relativ zum Zylinder und zum Stopfbuchsenlager, das die Kolbenstange beim Durchtritt durch die Zylinderstirnwand umschliesst, aus der Flucht verstellt werden. Dies hat ein einseitiges Spiel zwischen der Kolbenstange und dem Stopfbuchsenlager zur Folge, wodurch die Dichtungsringe dieses Lagers exzentrisch gestützt werden, was zu verringerter Standzeit führen kann.

Der Erfindung liegt die Aufgabe zugrunde, einen Kolbenkompressor der eingangs genannten Art dahingehend zu verbessern, dass ein Verstellen der Kreuzkopfachse vermieden wird und trotzdem der "runout" der Kolbenstange minimiert werden kann.

Diese Aufgabe wird erfindungsgemäss dadurch gelöst, dass die Bohrung auf der dem Kreuzkopf zugewendeten Stirnseite des Kolbens einen erweiterten, zum Aussendurchmesser des Kolbens exzentrisch angeordneten Bohrungsabschnitt aufweist und dass zwischen diesem Bohrungsabschnitt und der in ihn ragenden Kolbenstange ein Exzenterring angeordnet ist, dessen Innenbohrungsdurchmesser gleich dem Durchmesser der Kolbenstange ist und dessen zur Innenbohrung exzentrischer Aussendurchmesser gleich dem Durchmesser des erweiterten Bohrungsabschnittes ist. Durch die Exzentrizität des erweiterten Abschnitts der Kolbenbohrung und das Anbringen des Exzenterringes wird es möglich, die Achse des Kolbens relativ zur Achse der Kolbenstange so einzustellen, dass die Achse der Kolbenstange mit der Achse des Kreuzkopfes und der Zylinderachse in der Flucht bleibt. Dieses Einstellen kann sowohl bei der Erstmontage des Kompressors als auch nach gewissen Betriebszeiten erfolgen, d.h. wenn wegen des Betriebes Abnützungen am Kolben oder gegebenenfalls an den Kolbenführungsringen aufgetreten sind und der tolerierte "runout"-Wert überschritten worden ist. Darüberhinaus ist von Vorteil, dass das Anbringen des Exzenterringes konstruktiv einfacher ist, als die Achse des Kreuzkopfes nachstellbar auszubilden. Auch die Handhabung des Exzenterringes zwecks Einstellens des Kolbens ist einfacher als das Verstellen der Achse des Kreuzkopfes.

Ein Ausführungsbeispiel der Erfindung ist in der folgenden Beschreibung anhand der Zeichnung näher erläutert. Es zeigen:
- Fig. 1: einen schematisch stark vereinfachten Vertikalschnitt durch einen Kolbenkompressor der Horizontalbauart,
- Fig. 2: einen Schnitt durch den Kolben mit dem in ihn hineinragenden Kolbenstangenende,
- Fig. 3: eine Ansicht des Kolbens in Richtung des Pfeiles A in Fig. 2 in einem Zwischenzustand der Montage,
- Fig. 3a: ein Detail aus Fig. 3 in vergrössertem Massstab,
- Fig. 4: eine Ansicht des Kolbens in Richtung des Pfeiles B in Fig. 2 im Endzustand der Montage,
- Fig. 4a: ein Detail aus Fig. 4 in vergrössertem Massstab, jedoch im Zwischenzustand gemäss Fig. 3a und
- Fig. 4b: das gleiche Detail wie Fig. 4a, jedoch im Endzustand.

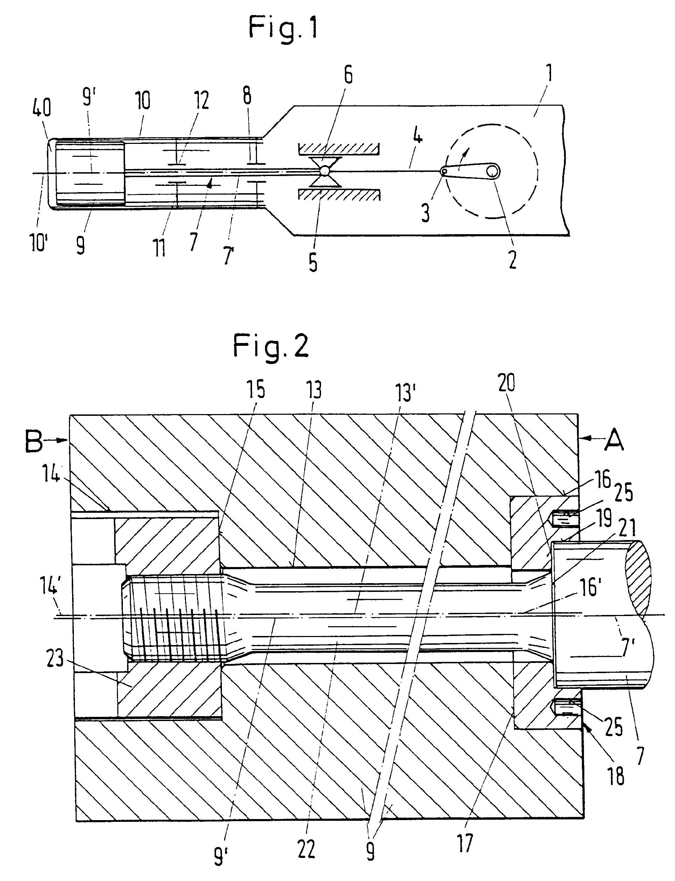

Gemäss Fig. 1 weist der Kolbenkompressor ein Kurbelgehäuse 1 auf, in dem eine Kurbelwelle 2 gelagert ist. An einem Kurbelzapfen 3 der Kurbelwelle 2 ist eine Schubstange 4 angeschlossen, die an ihrem in Fig. 1 linken Ende mit einem Zapfen 5 gelenkig verbunden ist, der Teil eines horizontal geradlinig hin und her beweglichen Kreuzkopfes 6 ist. An dem Kreuzkopf 6 ist eine Kolbenstange 7 befestigt, die das Kurbelgehäuse 1 im Bereich einer Oelabstreifvorrichtung 8 durchdringt und die an ihrem in Fig. 1 linken Ende mit einem Kolben 9 lösbar verbunden ist. Der Kolben 9 ist in an sich bekannter Weise mit nicht dargestellten Kolben- und Führungsringen z.B. aus Kunststoff versehen. Er ist in einem mit dem Kurbelgehäuse 1 verbundenen Zylinder 10 geführt und wird von der Kolbenstange 7 horizontal hin und her bewegt. Bei einer Bewegung des Kolbens 9 in Richtung zum Kurbelgehäuse 1 wird im Zylinderraum 40 zu Komprimierendes Gas angesaugt, das dann bei der Bewegung in der entgegengesetzten Richtung komprimiert wird. Nahe der Stelle, an der der Kolben 9 vom Saughub zum Kompressionshub umkehrt, ist zwischen dem Kolben und der Oelabstreifvorrichtung 8 im Zylinder 10 eine Stirnwand 11 vorgesehen, die im Durchtrittsbereich der Kolbenstange 7 mit einer diese umschliessenden Stopfbüchsdichtung 12 versehen ist. In Fig. 1 sind die Achse der Kolbenstange 7 mit 7', die Achse des Kolbens 9 mit 9' und die Achse des Zylinders 10 mit 10' bezeichnet. Abweichend von der Praxis sind sie hier miteinander fluchtend dargestellt.

Gemäss Fig. 2 ist der Kolben 9 mit einer durchgehenden Bohrung 13 versehen, deren Achse 13' exzentrisch zur Kolbenachse 9', d.h. zur Rotationsachse der Umfangs- oder Aussenfläche des Kolbens 9 liegt. Die Bohrung 13 ist an ihrem in Fig. 2 linken Ende zu einer Bohrung 14 erweitert, deren Achse 14' mit der Achse 13' fluchtet. Zwischen den Bohrungen 13 und 14 ist eine Schulter 15 vorhanden. Auch das in Fig. 2 rechte Ende der Bohrung 13 ist zu einer Bohrung 16 erweitert, deren Achse 16' mit der Achse 13' fluchtet und die über eine Schulter 17 in die Bohrung 13 übergeht.

In der erweiterten, ebenfalls zum Aussendurchmesser des Kolbens 9 exzentrischen Bohrung 16 ist ein Exzenterring 18 angeordnet, dessen Aussendurchmesser - abgesehen von den notwendigen Toleranzen - gleich dem Durchmesser der Bohrung 16 ist. In der gezeichneten Lage des Exzenterringes 18 fluchtet die Achse seines Aussendurchmessers mit der Achse 16'. Die Innenbohrung 19 des Exzenterringes 18 liegt exzentrisch zu dessen Aussendurchmesser und ist - abgesehen von den notwendigen Toleranzen - gleich dem Durchmesser der Kolbenstange 7, von der ein Endabschnitt von der Innenbohrung 19 umschlossen ist. Die Achse der Innenbohrung 19 fluchtet mit der Achse 7' der Kolbenstange. Die Innenbohrung 19 geht an ihrem in Fig. 2 linken Ende in eine Schulter 20 über, an der im montierten Zustand die Kolbenstange 7 mit einer Stirnfläche 21 anliegt.

Von der Stirnfläche 21 der Kolbenstange 7 geht in Fig. 2 nach links ein Stangenfortsatz 22 aus, der sich durch die Bohrung 13 des Kolbens 9 erstreckt und an seinem in die erweiterte Bohrung 14 ragenden Ende mit einem Gewinde versehen ist. Auf dieses Gewinde ist eine Mutter 23 geschraubt, die sich an die Schulter 15 anlegt und die Verbindung zwischen Kolbenstange 7 und Kolben 9 sicherstellt. Der Exzenterring 18 weist auf seiner äusseren Stirnfläche zwei zueinander diametral angeordnete Sackbohrungen 25 auf, die zum Aufnehmen eines passenden Werkzeugs dienen, mit dessen Hilfe der Exzenterring verstellt werden kann.

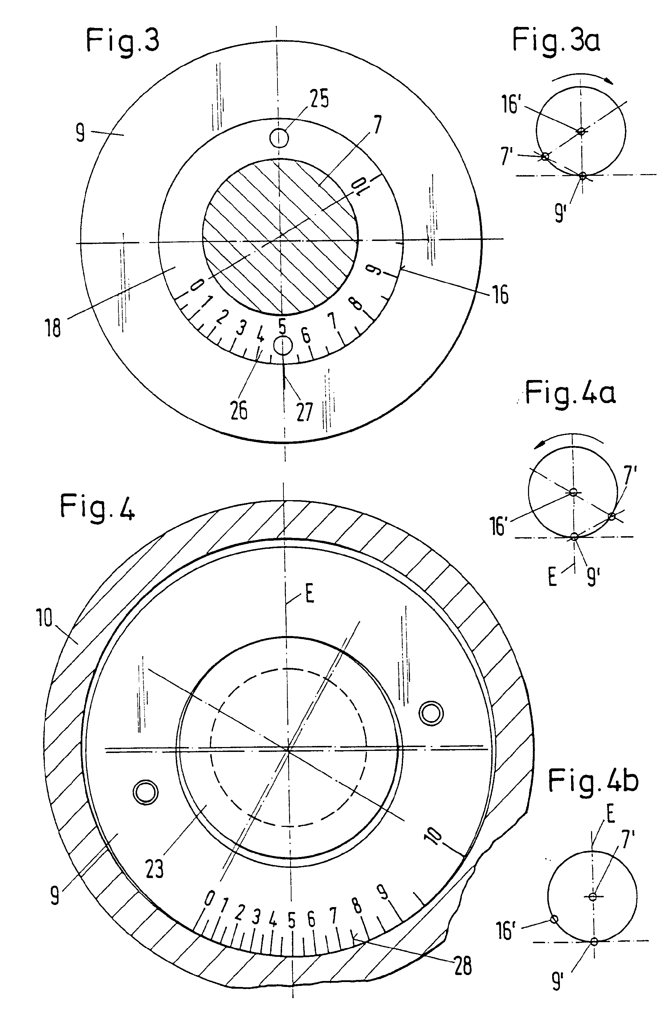

Gemäss Fig. 3 ist der Exzenterring 18 auf seiner äusseren Stirnfläche mit einer Skala 26 versehen, die von 0 bis 10 reicht und sich über den halben Umfang des Exzenterringes erstreckt. An der tiefsten Stelle der erweiterten Bohrung 16 des Kolbens 9 ist in dessen Stirnfläche eine Marke 27 angebracht. Wie sich aus Fig. 3a ergibt, befindet sich bei dem in Fig. 3 gezeichneten Montagebeispiel die Achse 7' der Kolbenstange links oberhalb der Achse 9' des Kolbens 9, wogegen rechts von der Achse 7' sowie oberhalb der Achse 9' die Achse 16' liegt, die identisch mit der Lage der Achse des Aussendurchmessers des Exzenterringes 18 ist.

Gemäss Fig. 4 ist auch auf der dem Kreuzkopf abgewendeten Stirnseite des Kolbens 9 eine Skala 28 angebracht, die sich über einen Viertel des Kolbenumfangs erstreckt und entsprechend der Skala 26 die Skalenwerte von 0 bis 10 umfasst.

Das Einstellen des Kolbens 9 relativ zur Kolbenstange 7 geschieht in folgender Weise. Wenn der Exzenterring 18 mit seinem Skalenwert 0 der Marke 27 gegenübersteht, so liegt die Kolbenstange 7 genau zentrisch zum Kolben 9, d.h. die Achsen 7' und 9' fallen zusammen. Da in der Praxis der Verlauf der Kolbenstangenachse 7' von dem idealen Verlauf einer horizontalen Achse abweicht, werden die beiden Achsen so zueinander verstellt, dass die Kolbenstangenachse zumindest der idealen Lage der Horizontalachse nahekommt. Aufgrund von Messungen an der Kolbenstange kann die Grösse der Abweichung der Kolbenstangenachse von der horizontalen Achse festgestellt und daraus die Grösse des Skalenwertes für das Verdrehen des Exzenterringes 18 bestimmt werden. Im Beispiel nach Fig. 3 und 4 beträgt dieser Skalenwert 5. Vor dem Anziehen der Kolbenmutter 23 wird also der Exzenterring 18 soweit im Uhrzeigersinn in Fig. 3 gedreht, dass der Skalenwert 5 mit der Marke 27 bündig steht. Hierdurch wird also die Kolbenstangenachse 7' relativ zur Kolbenachse 9' angehoben (Fig. 3a und 4a). Nunmehr wird die Mutter 23 angezogen, so dass sich die relative Stellung des Kolbens 9 zur Kolbenstange 7 nicht mehr ändert. Als nächstes wird der Kolben zusammen mit der in ihm fixierten Kolbenstange relativ zum Zylinder 10 aus der in Fig. 4a gezeigten Stellung im Gegenuhrzeigersinn in die in Fig. 4b gezeigte Stellung gedreht, um zu erreichen, dass die Kolbenstangenachse 7' und die Kolbenachse 9' in derselben vertikalen Ebene E liegen wie die Achse 10' des Zylinders 10. Dies wird mit Hilfe der Skala 2B bewirkt, indem deren Skalenwert 5 bündig zur vertikalen Ebene E eingestellt wird, in der sich die Zylinderachse 10' befindet, wie dies in Fig. 4 und 4b dargestellt ist. Nunmehr wird die feste Verbindung zwischen der Kolbenstange 7 und dem Kreuzkopf 6 hergestellt.

In dem beschriebenen Ausführungsbeispiel sind die Exzentrizität der Kolbenbohrung 13, 14, 16 und die Exzentrizität des Exzenterringes 18 gleich gross. Abweichend davon können diese Exzentrizitäten auch verschieden gross sein. Ausserdem können die Bohrungen 13 und 14 konzentrisch zum Aussendurchmesser des Kolbens 9 liegen, wobei das Spiel zwischen dem Stangenfortsatz 22 und der Bohrung 13 sowie das Spiel zwischen der Mutter 23 und der Bohrung 14 entsprechend gross zu bemessen sind. Auch ist es möglich, die Skaleneinteilung 28 am Kolben 9 auf der dem Kreuzkopf zugewendeten Stirnfläche des Kolbens anzubringen. Anstelle der Sackbohrungen 25 können auch anders gestaltete Angriffsflächen für das Verstellwerkzeug am Exzenterring 18 vorgesehen werden.

## Patentansprüche

1. Kolbenkompressor mit mindestens einem eine im wesentlichen horizontale Achse aufweisenden Zylinder und einem darin geführten Kolben, der über eine Kolbenstange und einen Kreuzkopf von einer Kurbelwelle angetrieben ist, wobei das dem Kreuzkopf abgewendete Ende der Kolbenstange in eine Bohrung des Kolbens ragt und der Kolben mit diesem Kolbenstangenende lösbar verbunden ist, dadurch **gekennzeichnet**, dass die Bohrung (13) auf der dem Kreuzkopf (6) zugewendeten Stirnseite des Kolbens (9) einen erweiterten, zum Aussendurchmesser des Kolbens exzentrisch angeordneten Bohrungsabschnitt (16) aufweist und dass zwischen diesem Bohrungsabschnitt (16) und der in ihn ragenden Kolbenstange (7) ein Exzenterring (18) angeordnet ist, dessen Innenbohrungsdurchmesser gleich dem Durchmesser der Kolbenstange (7) ist und dessen zur Innenbohrung (19) exzentrischer Aussendurchmesser gleich dem Durchmesser des erweiterten Bohrungsabschnittes (16) ist.

2. Kolbenkompressor nach Anspruch 1, dadurch gekennzeichnet, dass der Exzenterring (18) auf seiner dem Kreuzkopf (6) zugewendeten Stirnfläche und die dem Kreuzkopf (6) abgewendete Stirnfläche des Kolbens (9) mit je einer Skaleneinteilung (26 bzw. 28) versehen sind.

3. Kolbenkompressor nach Anspruch 1 oder 2, dadurch gekennzeichnet, dass der Kolben (9) auf der dem Kreuzkopf (6) abgewendeten Stirnseite einen erweiterten Bohrungsabschnitt (14) aufweist, in dem eine die Kolbenstange (7) mit dem Kolben (9) verbindende Mutter (23) angeordnet ist.

4. Kolbenkompressor nach Anspruch 3, dadurch gekennzeichnet, dass auch der letztgenannte Bohrungsabschnitt (14) des Kolbens (9) exzentrisch zum Aussendurchmesser des Kolbens angeordnet ist und die Exzentrizität dieses Bohrungsabschnittes (14) und die Exzentrizität des Exzenterringes (18) gleiche Grösse aufweisen.

## Claims

1. A reciprocating compressor having at least one cylinder whose axis is substantially horizontal, a piston being guided in the cylinder and driven by a crankshaft by way of a piston rod and a crosshead, the piston rod end which is remote from the crosshead extending into a bore in the piston, the same being releasably connected to such piston rod end, characterised in that near the piston end face near the crosshead (6) the bore (13) widens into a widened bore part (16) disposed eccentrically of the piston outer diameter and an eccentric ring (18) is disposed between the widened bore part (16) and the piston rod (7) extending thereinto, the inner bore diameter of the eccentric ring (18) being equal to the diameter of the piston rod (7) while the outer diameter of the eccentric ring (18), such diameter being eccentric of the inner bore (19), is equal to the diameter of the widened bore part (16).

2. A compressor according to claim 1, characterised ihn that the eccentric ring (18) is formed, on its end face near the crosshead (6), and the piston end face remote from the crosshead (6) is formed, with a respective scale division (26, 28).

3. A compressor according to claim 1 or 2, characterised in that the piston end face remote from the cross-head (6) is formed with a widened bore part (14) in which a nut (23) connecting the piston rod (7) to the piston (9) is disposed.

4. A compressor according to claim 3, characterised in thsat the last-named widened bore part (14) of the piston (9) is eccentric of the piston outer diameter and the eccentricities of the widened bore part (14) and of the eccentric ring (18) are the same.

## Revendications

1. Compresseur à piston comprenant au moins un cylindre dont l'axe est sensiblement horizontal, ainsi qu'un piston guidé dans ce dernier et commandé par l'intermédiaire d'une tige et d'une crosse par un vilebrequin, l'extrémité de la tige du piston qui est tournée à l'opposé de la crosse pénétrant dans un alésage du piston et le piston étant relié de manière amovible à cette extrémité de la tige, caractérisé en ce que l'alésage (13) comporte sur le côté extrême du piston (9) qui est tourné vers la crosse (6) une partie élargie (16) qui est excentrée par rapport au diamètre extérieur du piston et en ce qu'un anneau excentré (18), dont le diamètre intérieur de l'alésage est égal au diamètre de la tige (7) du piston et dont le diamètre extérieur, qui est excentré par rapport à l'alésage intérieur (19), est égal au diamètre de la partie élargie (16) de l'alésage, est disposé entre cette partie (16) de l'alésage et la tige (7) du piston qui pénètre dans cette dernière.

2. Compresseur à piston selon la revendication 1, caractérisé en ce que l'anneau excentré (18) comporte une graduation (26) sur la surface extrême tournée vers la crosse (6) et la surface extrême du piston (9) qui est tournée à l'opposé de la crosse (6) comporte une graduation (28).

3. Compresseur à piston selon la revendication 1 ou 2, caractérisé en ce que le piston (9) comporte sur le côté extrême tourné à l'opposé de la crosse (6) une partie élargie (14) de l'alésage dans laquelle est disposé un écrou (23) qui relie la tige (7) et le piston (9).

4. Compresseur à piston selon la revendication 3, caractérisé en ce que la dernière partie mentionnée (14) de l'alésage du piston (9) est aussi excentrée par rapport au diamètre extérieur du piston et l'excentricité de cette partie (14) de l'alésage ainsi que l'excentricité de l'anneau excentré (18) sont égales.
